# EUROPEAN PATENT SPECIFICATION

(11) **EP 0 629 095 B1**
(45) Date of publication and mention of the grant of the patent: **23.05.2001**
(21) Application number: 94103409.2
(22) Date of filing: 07.03.1994
(51) Int. Cl.: H04Q 7/20, H04L 12/28, H04L 12/56

(54) **Improvements in or relating to cellular mobile radio systems**
Verbesserungen an zellular mobilen Funksystemen und diese betreffend
Améliorations relatives aux systèmes radio mobile cellulaires

(30) Priority: 10.06.1993 GB 9312005
(43) Date of publication of application: 14.12.1994
(73) Proprietor: ROKE MANOR RESEARCH LIMITED, Romsey, Hampshire, SO51 0ZN (GB)
(72) Inventor: DeVile, Jonathan Mark, Bournemouth, Dorset BH1 4DR (GB)
(74) Representative: Allen, Derek

(56) References cited:
- WO-A-92/10042
- 41ST IEEE VEHICULAR TECHNOLOGY CONFERENCE. GATEWAY TO THE FUTURE. TECHNOLOGY IN MOTION, 19 May 1991, ST. LOUIS, MO, US pages 399 - 407, XP000260211 DR. HAINE 'A NEW RADIO ACCESS PROTOCOL AND NETWORK ARCHITECTURE FOR MOBILE PACKET DATA'
- 1993 43RD IEEE VEHICULAR TECHNOLOGY CONFERENCE. PERSONAL COMMUNICATION - FREEDOM THROUGH WIRELESS TECHNOLOGY, 18 May 1993, SECAUCUS, NJ, US pages 909 - 912, XP000393328 ZIEGLER ET AL. 'An Experimental Implementation of the PRMA Protocol for Wireless Communication'

## Description

This invention relates to cellular mobile radio systems which include a packet reservation multiple access (PRMA) protocol.

Systems which use such a protocol are described or referred to in our co-pending Patent Application No GB 9219824.1 (F20927) to which attention is hereby directed.

Future mobile radio systems will be required to support both voice and data services. Furthermore, in order to support some services, a facility allowing dynamic assignment of capacity during a call is required, as for example, with a video codec. Hence a scheme for implementing such systems should provide a facility for allocating channel capacity on demand from a mobile. In addition, in order to make the most efficient use of the scarce spectral resource, a mobile's logical channel which does not experience activity should not occupy capacity on the channel. Hence, although a logical connection may be maintained between a mobile and a base station, a physical connection is preferably not made unless traffic is generated on that logical channel.

In the case where communication is required on a down-link (base station to mobile) the physical connection of a logical channel should be made which has a capacity which is able to satisfy the instantaneous demands to deliver the activity on the channel. The number of time slots in a time division multiple access (TDMA) frame, should be such that the instantaneous capacity demanded by the channel is satisfied. That is to say, if a high bit rate user requires n-time slots, then these slots must be reserved for the base station to broadcast to the mobile. However, the mobile needs to be informed of the time slots to which it should listen. In order to receive this information, appertaining to the time slots to which it should listen, a special mechanism is required, otherwise a mobile would need to be switched on so as to be alert at all times. This is clearly impracticable and undesirable in view of the battery drain which would be involved, and the radio resource that would have to be permanently assigned, which could not be tolerated for hand portable units for example.

It is therefore an important object of the present invention to provide such a mechanism which is economical of mobile battery energy, and to improve the utilisation of the radio resource.

The article entitled "A new radio access protocol and network architecture for mobile packet data" (41^{st} IEEE Vehicular Technology Conference, 19 May 1991, St. Louis, MO, US, pages 399-407, XP000260211) describes a cellular mobile data service capable of supporting multiple access. The service provides down setup slots which include a mobile terminal's unique address, slot allocations for a down transfer phase and information concerning the amount of data to be transferred. If the mobile terminal decodes the above information correctly, an acknowledgement is transmitted in the correct upslot.

According to the present invention, a cellular mobile radio system is provided which is arranged to operate in accordance with a packet reservation multiple access protocol, said cellular radio system having a down-link divided into a plurality of time slots for transmission of data from a base station to mobile stations and at least one Fast Paging slot reserved for transmission of information appertaining to an address of a mobile together with data identifying which of said plurality of time slots data for that mobile will be subsequently transmitted by said base station consequent upon receipt by said base station of an FP acknowledgement signal transmitted by said mobile on an up-link, characterised in that less than one FP slot per frame is reserved.

The FP slot should include data identifying the address of a mobile being paged, together with data identifying the slots in which information for that mobile will subsequently be transmitted consequent upon receipt by the base station of an FP acknowledgement signal.

The present invention is eminently suited for use in a system of the kind which forms the subject of our co-pending GB patent application no 9219824.1, as referred to above, wherein data and information is transmitted in separate slots, although alternatively it may find application in other systems wherein mobiles contend for access in the same time slot.

By using a system according to the present invention, it is apparent that mobile battery power can be saved since continuous channel monitoring is not required, and spectral resource is efficiently used since time slots are not occupied unless activity is experienced on the logical channel.

Although mobiles are not required to listen all of the time, it is apparent that they should be arranged to listen to all FP slots in a frame so as to receive fast paging information.

However, in order to economise still further on their battery power, less than one FP slot per frame may be used/transmitted.

Calculations show that in a macro-cell scenario less than one half of an FP slot per frame is required (i.e. one every two frames) to ensure sufficient capacity to effect no delay for paging mobiles. In fact, the limit on the number of FP slots per frame is set by the time that the base station is prepared to wait before the next FP slot. FP slots are simple to provide and require only a small quantity of down-link capacity which is shared by all mobiles.

One embodiment of the invention will be now described by way of example only with reference to the accompanying drawings, in which:
FIGURE 1 is a schematic diagram showing slots in both an up-link and a down-link transmission burst comprising two frames, and,
FIGURE 2 is a generally schematic block diagram of base and mobile station transmitter/receivers.

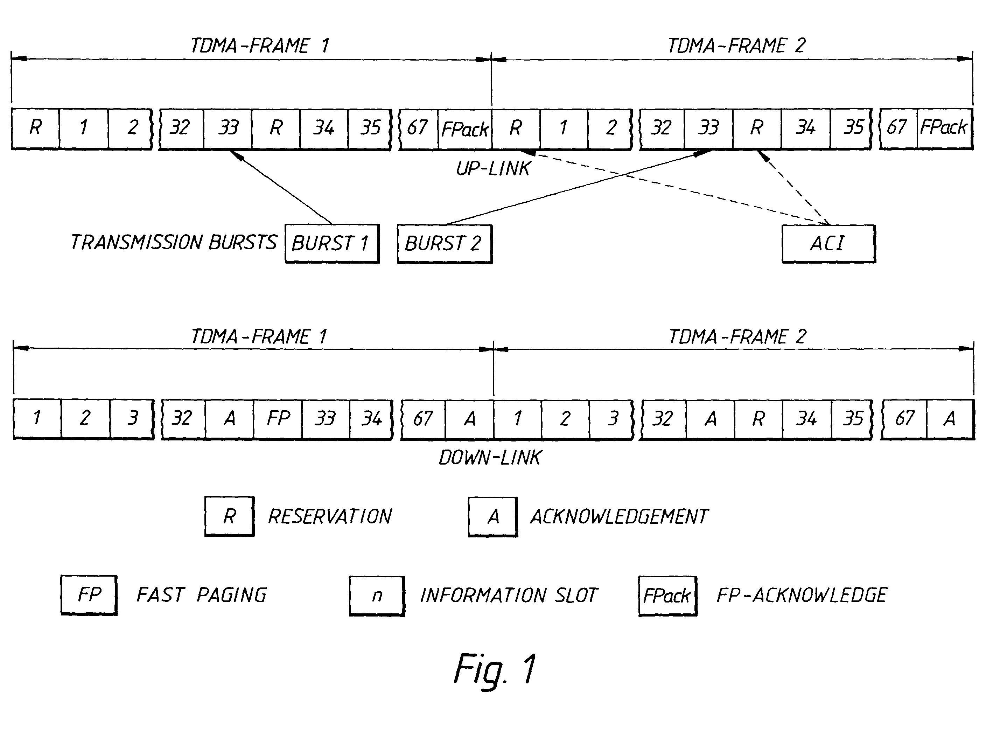

Referring now to Figure 1, a TDMA frame includes information slots (I slots) in which information is transmitted, which I slots are present both on the up-link and the down-link. As shown in the drawing, on the down-link, FP slots, i.e. fast paging slots are also provided and on the up-link, fast paging acknowledgement slots, FP ack slots, are provided and it is the provision of these FP slots on the down-link and FP ack slots on the up-link which is central to the present invention. As described in our co-pending GB Patent Application No 9219824.1, as referred to above, on the up-link, R slots are additionally provided and on the down-link, A slots are additionally provided, the purpose of which additional slots is related to the operation of the multiple access scheme facilities for the up-link as described in our co-pending Patent Application but these facilities are not directly relevant to the present invention.

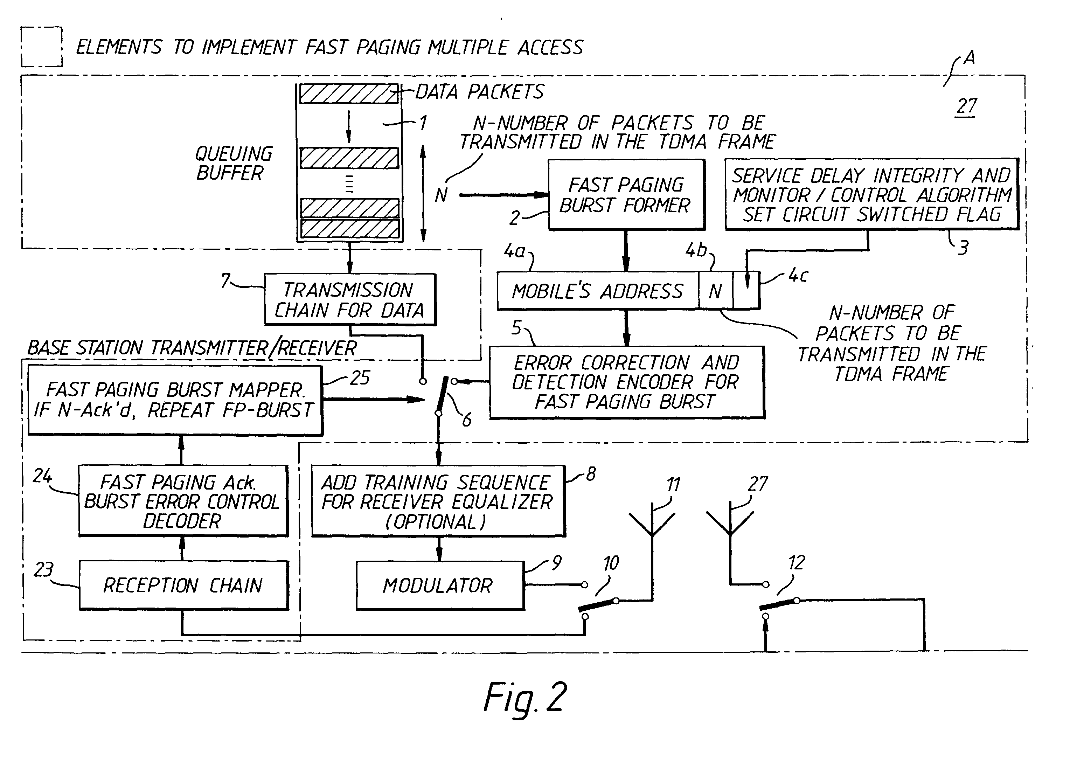

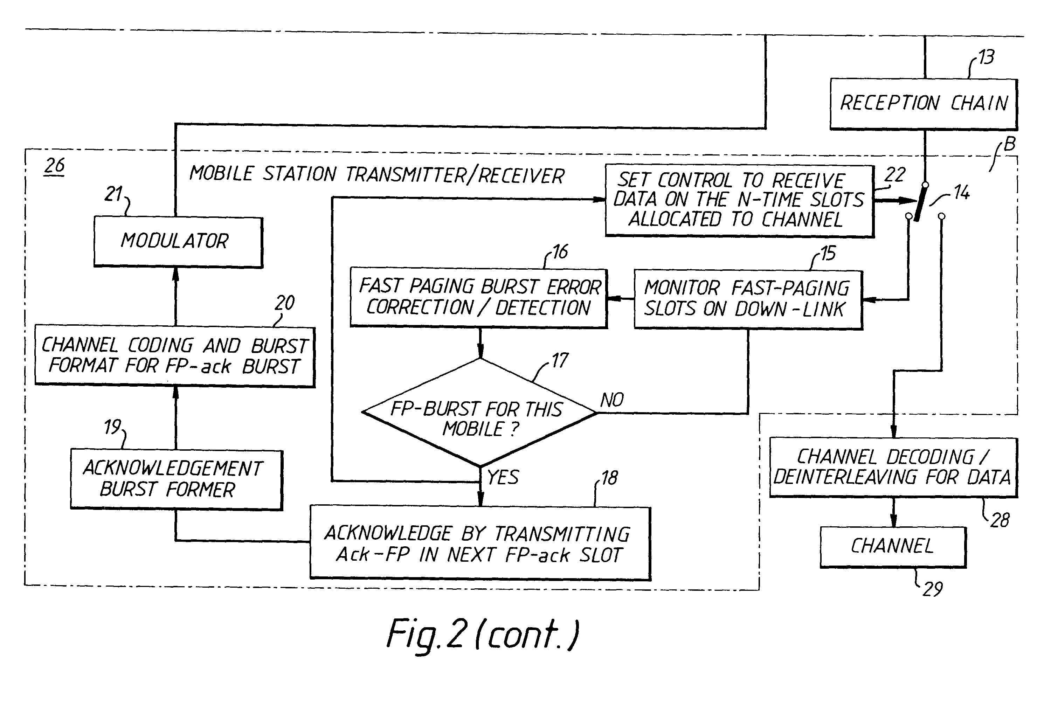

Referring now to Figure 2, which is a block schematic diagram of transmitter/receivers 27 and 26 associated with a base station and a mobile respectively, units included within shaded regions A and B are the units required (over and above those normally provided), to implement the present invention. In order to implement the present invention, whereby fast paging is facilitated, a number of time slots n must be reserved which number n is sufficient to facilitate the transmission of a predetermined quantity of information, which information is generated during a period of activity on a logical channel. This quantity is measured by the number of units of data which are stored in a buffer store 1 which is filled during a TDMA frame. The value of n is read and used by a fast paging burst formatter 2 to form a fast paging FP burst 4, the make-up of which is shown schematically.

As shown, the FP burst 4 contains several data fields including a field 4a identifying the logic channel, or address of a mobile, a field 4b including data which specifies the number of time slots n required and a field 4c including a flag which serves to indicate whether the capacity defined by the n slots is to be assigned permanently or released at the end of a current activity period. This flag is set by a decision device 3, setting up of the flag being dependent on required service characteristics, such as, for example, delay critical services or signalling channels or for any other reason which would require capacity to be assigned on a permanent basis. The FP burst 4 is then coded for error protection and detection purposes by an error correction unit 5, arranged to feed a switch 6, which is fed also from the buffer store 1 via a transmission chain 7 which forms a part of the base station transmitter/receiver 27. The switch 6 is set so that the transmission chain 7 is used for the transmission of an FP burst. The FP transmission burst would typically include the addition of a training sequence generator 8, shown schematically in the drawings, and a modulator 9 and the burst is transmitted by an aerial 11 fed from an RF amplifier means (not shown) when a switch 10 is set to couple the modulator 9 to the aerial 11. The base station transmitter/ receiver 27, as just before partially described, is arranged to communicate with the mobile unit 26, which includes a switch 12, which is set to receive so that the mobile unit 26 is receiving transmissions from the base station 27. When the switch 12 is thus set, a reception chain 13 is fed via the switch 12 from an aerial 27, the reception chain 13 being conventional and being arranged to comprise a de-modulator and an equaliser (not shown) as required to detect a transmission burst from the base station 27. The reception chain 13 is arranged to feed a switch 14, which is set so as to feed a fast paging monitoring device 15, which receives all FP bursts transmitted in the FP slots, as shown in Figure 1. Each FP burst received is passed to a fast paging error/detection device 16, which performs error correction decoding and error detection. The FP burst is then fed to a decision device 17. If the FP burst does not contain an address appropriate to the mobile terminal which has received it, or if the FP burst is detected to be in error, then the device 17 returns to the FP monitoring device 15. If however, the FP burst is adjudged to contain the address of the mobile's logical channel, then an appropriate signal is fed from the decision device 17 to an acknowledgement transmitter co-ordinator 18 which co-ordinates the transmission of a FP acknowledgement burst (FP ack) in the FP ack slots on the up-link as shown in Figure 1. In order to perform the acknowledgement transmitting function, signals are fed from the co-ordinator 18 to an FP ack burst former 19 which contains the address of the mobile and the number of slots n which have been assigned. A burst which is subsequently formed is then fed via an error coding device 20 to a modulator 21 which is arranged to feed the switch 12 for transmission when the switch is appropriately set. As will be appreciated by those skilled in the art, the modulator 21 is arranged to feed the aerial 27 for transmission purposes via the switch 12 and appropriate RF processing and amplification stages (not shown in the drawing).

As the switch 12 is set, a device 22 is simultaneously triggered to co-ordinate operation of the reception chain so as to receive down-link data in the n information slots assigned by the base station, and signalled by the FP burst. This is done by setting the switch 14, after which the data is received by the usual receiver services contained in a unit 28 which serves for channel decoding and the de-interleaving of data which is thereafter fed to a channel 29.

The reception of an FP ack burst at the base station is effected via the antenna 11 and the switch 10 which connects to a reception chain 23 at the base station which contains the usual apparatus for the detection of a transmission burst such as a de-modulator and equaliser etc. (not shown). Error decoding and detection is effected by a unit 24 after which the FP ack burst is determined as being either an acknowledgement signal, or a negative acknowledgement signal by means of a fast paging burst mapper 25. If an acknowledgement signal is received, no further action is taken, whereas a negative acknowledgement causes a retransmission of the FP burst by the fast paging burst mapper 25.

Various modification may be made to the arrangement just before described without departing from the scope of the invention, and for example any suitable mobile communication system using a PRMA protocol may serve as a system in which the invention could be embodied.

## Claims

1. A cellular mobile radio system arranged to operate in accordance with a packet reservation multiple access protocol, said cellular radio system having a down-link divided into a plurality of time slots for transmission of data from a base station to mobile stations and at least one Fast Paging slot (FP) reserved for transmission of information appertaining to an address (4a) of a mobile together with data identifying which of said plurality of time slots data for that mobile will be subsequently transmitted by said base station consequent upon receipt by said base station of an FP acknowledgement (F Pack) signal transmitted by said mobile on an up-link, characterised in that less than one FP slot (FP) per frame is reserved.

2. A system as claimed in Claim 1, wherein every other frame is arranged to include an FP slot (FP).

## Patentansprüche

1. Zellenmobilfunksystem, das so beschaffen ist, daß es gemäß einem Paketreservierung-Mehrfachzugriff-Protokoll arbeitet, wobei das Zellenfunksystem eine Abwärtsstrecke besitzt, die in mehrere Zeitschlitze für die Übertragung von Daten von einer Basisstation an Mobilstationen und in wenigstens einen Schlitz für schnelles Paging (FP) unterteilt ist, der reserviert ist für die Übertragung von Informationen bezüglich einer Adresse (4a) einer Mobileinheit zusammen mit Daten, die bestimmen, welche der mehreren Zeitschlitz-Daten für diese Mobileinheit anschließend von der Basisstation gesendet werden, nachdem von der Basisstation auf einer Aufwärtsstrecke ein FP-Quittierungssignal (F-Paket), das von der Mobileinheit gesendet wird, empfangen worden ist, dadurch gekennzeichnet, daß weniger als ein FP-Schlitz (FP) pro Rahmen reserviert ist.

2. System nach Anspruch 1, bei dem jeder andere Rahmen so beschaffen ist, daß er einen FP-Schlitz (FP) enthält.

## Revendications

1. Système de radiocommunication mobile cellulaire agencé de manière à fonctionner selon un protocole d'accès multiple à réservation de paquet, ledit système de radiocommunication cellulaire ayant une liaison descendante divisée en une pluralité d'intervalles de temps pour la transmission de données à partir d'une station de base vers des stations mobiles et au moins un intervalle d'appel rapide (FP) réservé à la transmission d'informations concernant une adresse (4a) d'un mobile ainsi que des données identifiant ladite pluralité d'intervalles de temps pendant lesquels les données destinées à ce mobile seront transmises par la suite par ladite station de base en conséquence de la réception par ladite station de base d'un signal d'accusé de réception de FP (FPack) transmis par ledit mobile sur une liaison montante, caractérisé en ce que moins d'un intervalle FP (FP) par trame est réservé.

2. Système selon la revendication 1, dans lequel une trame sur deux est agencée de manière à comprendre un intervalle FP (FP).
